(19) Europäisches Patentamt / European Patent Office / Office européen des brevets

(11) **EP 4 352 546 B1**

(12) **EUROPÄISCHE PATENTSCHRIFT**

(45) Veröffentlichungstag und Bekanntmachung des Hinweises auf die Patenterteilung:
**04.06.2025 Patentblatt 2025/23**

(21) Anmeldenummer: **22723627.0**

(22) Anmeldetag: **20.04.2022**

(51) Internationale Patentklassifikation (IPC):
**G01S 17/931** (2020.01) **G01S 13/931** (2020.01)
**G01S 7/40** (2006.01) **G01S 7/497** (2006.01)
**G06V 20/58** (2022.01)

(52) Gemeinsame Patentklassifikation (CPC):
**G01S 17/931; G01S 7/40; G01S 7/497;**
**G01S 13/931; G06V 20/58**

(86) Internationale Anmeldenummer:
**PCT/EP2022/060344**

(87) Internationale Veröffentlichungsnummer:
**WO 2022/258248 (15.12.2022 Gazette 2022/50)**

(54) **VERFAHREN UND VORRICHTUNG ZUR BEWERTUNG EINER LEISTUNGSFÄHIGKEIT MINDESTENS EINES UMGEBUNGSSENSORS EINES FAHRZEUGS SOWIE FAHRZEUG MIT EINER SOLCHEN VORRICHTUNG**

METHOD AND DEVICE FOR ASSESSING THE PERFORMANCE OF AT LEAST ONE ENVIRONMENTAL SENSOR OF A VEHICLE, AND VEHICLE WITH SUCH A DEVICE

PROCÉDÉ ET DISPOSITIF POUR L'ÉVALUATION DE LA PERFORMANCE D'AU MOINS UN CAPTEUR ENVIRONNEMENTAL D'UN VÉHICULE, ET VÉHICULE ÉQUIPÉ D'UN TEL DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2021 DE 102021002910**

(43) Veröffentlichungstag der Anmeldung:
**17.04.2024 Patentblatt 2024/16**

(73) Patentinhaber: **Mercedes-Benz Group AG**
**70372 Stuttgart (DE)**

(72) Erfinder:
• **LAAROUSI, Rihab**
**71116 Gärtringen (DE)**
• **STRACKE, Tobias**
**76137 Karlsruhe (DE)**

(74) Vertreter: **Novagraaf Group**
**Chemin de l'Echo 3**
**1213 Onex / Geneva (CH)**

(56) Entgegenhaltungen:
US-A1- 2015 347 096    US-A1- 2021 101 624
US-A1- 2021 117 787

**Beschreibung**

Die Erfindung betrifft ein Verfahren zur Bewertung einer Leistungsfähigkeit mindestens eines Umgebungssensors eines Fahrzeugs nach den Merkmalen des Oberbegriffs des Anspruchs 1, eine Vorrichtung zur Bewertung einer Leistungsfähigkeit mindestens eines Umgebungssensors eines Fahrzeugs und ein Fahrzeug.

Aus dem Stand der Technik sind, wie in der DE 10 2017 006 260 A1 beschrieben, ein Verfahren zum Bestimmen von Detektionseigenschaften wenigstens eines Umgebungssensors in einem Fahrzeug und ein Fahrzeug, eingerichtet zur Durchführung eines solchen Verfahrens, bekannt. Das Verfahren umfasst ein Auslesen einer Mehrzahl von Umgebungssensoren eines Fahrzeugs jeweils in einer Mehrzahl von Messzyklen, ein Identifizieren eines gleichen Zielobjekts in jedem Messzyklus der Mehrzahl von Messzyklen, wobei für wenigstens einen zu prüfenden Umgebungssensor der Mehrzahl von Umgebungssensoren für jeden Messzyklus der Mehrzahl von Messzyklen geprüft wird, ob das Zielobjekt von dem zu prüfenden Umgebungssensor in dem jeweiligen Messzyklus erfasst wurde, ein Bilden einer Detektionszahl für den zu prüfenden Umgebungssensor als Anzahl derjenigen Messzyklen der Mehrzahl von Messzyklen, in denen das Zielobjekt durch den zu prüfenden Umgebungssensor erfasst wurde, und ein Ermitteln eines Funktionsmaßes für den zu prüfenden Umgebungssensor aus der Detektionszahl.

Aus der US 2015/347 096 A1 ist bekannt, dass eine False-Negative-Rate eines Umgebungssensors eines Fahrzeugs eine Sensoreigenschaft ist, die von einem Hersteller des Umgebungssensors bereitgestellt wird.

Aus der US 2021/117 787 A1 ist bekannt, dass eine False-Negative-Rate eines Sensors, insbesondere eines Lidarsensors eines Fahrzeugs, anhand des Anteils von vom Sensor nicht detektierten Objekten an der Gesamtzahl von tatsächlich vorhandenen Objekten bestimmt werden kann.

Aus der US 2021/101 624 A1 ist ein Verfahren zur Erstellung einer Belegungskarte aus Sensordaten mehrerer Sensoren eines autonomen Fahrzeugs bekannt, wobei vorgesehen ist, dass Schwellwerte für False-Negative-Raten bestimmt werden und die False-Negative-Raten anhand von detektierten Objekten und der Abweichung von Ground-Truth-Daten ermittelt werden.

Der Erfindung liegt die Aufgabe zu Grunde, ein gegenüber dem Stand der Technik verbessertes Verfahren zur Bewertung einer Leistungsfähigkeit mindestens eines Umgebungssensors eines Fahrzeugs, eine gegenüber dem Stand der Technik verbesserte Vorrichtung zur Bewertung einer Leistungsfähigkeit mindestens eines Umgebungssensors eines Fahrzeugs und ein gegenüber dem Stand der Technik verbessertes Fahrzeug anzugeben.

Die Aufgabe wird erfindungsgemäß gelöst durch ein Verfahren zur Bewertung einer Leistungsfähigkeit mindestens eines Umgebungssensors eines Fahrzeugs mit den Merkmalen des Anspruchs 1, eine Vorrichtung zur Bewertung einer Leistungsfähigkeit mindestens eines Umgebungssensors eines Fahrzeugs mit den Merkmalen des Anspruchs 8 und ein Fahrzeug mit den Merkmalen des Anspruchs 9.

Vorteilhafte Ausgestaltungen der Erfindung sind Gegenstand der Unteransprüche.

In einem erfindungsgemäßen Verfahren zur Bewertung einer Leistungsfähigkeit mindestens eines Umgebungssensors oder mehrerer Umgebungssensoren eines Fahrzeugs, insbesondere eines für einen automatisierten Fahrbetrieb, insbesondere für einen hochautomatisierten oder autonomen Fahrbetrieb, eingerichteten Fahrzeugs, werden folgende Verfahrensschritte durchgeführt:

- Erfassen, insbesondere fortlaufendes Erfassen, von False Negatives des Umgebungssensors bezüglich mindestens eines Referenzobjekts,
- Klassifizieren der während eines vorgegebenen Auswertezeitraums erfassten False Negatives nach ihrer zeitlichen Länge und Zuordnen zu jeweils einer von mehreren vorgegebenen Zeitklassen,
- Ermitteln einer False-Negative-Rate der jeweiligen Zeitklasse für jede der Zeitklassen, die angibt, wie oft False Negatives der jeweiligen Zeitklasse während des vorgegebenen Auswertezeitraums auftreten,
- Vorgeben einer False-Negative-Schwelle für jede der Zeitklassen,
- Ermitteln für jede Zeitklasse, wie oft die False-Negative-Rate der jeweiligen Zeitklasse die für diese Zeitklasse vorgegebene False-Negative-Schwelle überschreitet,
- Bewerten der Leistungsfähigkeit des Umgebungssensors als beeinträchtigt, wenn die, insbesondere innerhalb eines vorgegebenen Zeitraums, beispielsweise einer Stunde, ermittelte Anzahl der Überschreitungen der für die jeweilige Zeitklasse vorgegebenen False-Negative-Schwelle durch die False-Negative-Rate höher ist als ein für die jeweilige Zeitklasse vorgegebener Wert, insbesondere eine für die jeweilige Zeitklasse vorgegebene Häufigkeitsschwelle.

Eine erfindungsgemäße Vorrichtung zur Bewertung einer Leistungsfähigkeit mindestens eines Umgebungssensors eines Fahrzeugs, insbesondere eines für einen automatisierten Fahrbetrieb, insbesondere für einen hochautomatisierten oder autonomen Fahrbetrieb, eingerichteten Fahrzeugs, ist ausgebildet und eingerichtet zur Durchführung des Verfahrens. Insbesondere umfasst die Vorrichtung eine Verarbeitungseinheit, welche ausgebildet und eingerichtet ist zur Durchführung des Verfahrens. Die Vorrichtung umfasst zudem insbesondere den mindestens einen Umgebungssensor des Fahrzeugs, insbesondere mehrere Umgebungssensoren des Fahrzeugs. Der jeweilige Umgebungssensor ist beispielsweise als Radarsensor, Lidarsensor oder Kamerasensor ausgebildet, wobei die Vorrichtung mehrere gleich oder unterschiedlich ausgebildete Umgebungssensoren umfassen kann.

Ein erfindungsgemäßes Fahrzeug umfasst diese Vorrichtung. Das Fahrzeug ist insbesondere ausgebildet und eingerichtet zur Durchführung eines automatisierten Fahrbetriebs, insbesondere eines hochautomatisierten oder autonomen Fahrbetriebs.

Der mindestens eine oder der jeweilige Umgebungssensor ist insbesondere ein Umgebungserfassungssensor, insbesondere zur Erfassung einer äußeren Umgebung des Fahrzeugs. Die Leistungsfähigkeit des mindestens einen Umgebungssensors wird auch als Sensorperformance bezeichnet.

Referenzobjekte sind ausgewählte Objekte, die für Bewertung der Leistungsfähigkeit hinsichtlich der False Negatives geeignet sind. Die Auswahl des Referenzobjekts kann nach folgenden Kriterien erfolgen:

- Das Objekt existiert, d. h. es wird von mindestens einem der Umgebungssensoren erkannt,
- das Objekt müsste auch von dem zu bewertenden Umgebungssensoren erkannt werden, liegt also in dessen Erfassungsbereich, und
- das Objekt ist für den zu bewertenden Umgebungssensoren nicht verdeckt.

Die Referenzobjekte sind somit für Umgebungssensoren, die einen gerade oder schräg nach vorn ausgerichteten Erfassungsbereich aufweisen, insbesondere Objekte, die sich unmittelbar vor dem Fahrzeug und seitlich vor dem Fahrzeug befinden. Beispiele von Objekten, die nicht als Referenzobjekte geeignet sind, sind beispielsweise ein Objekt, das für den jeweiligen Umgebungssensor verdeckt ist, und ein Objekt, das außerhalb des Detektionsbereiches, d. h. des Erfassungsbereiches, des Umgebungssensors liegt. Solche Objekte sind nicht geeignet, um die Detektionsperformance, d. h. die Leistungsfähigkeit bezüglich Detektionen, eines Umgebungssensors zu überprüfen, da sie vom Umgebungssensor nicht erfasst werden können und somit vom Umgebungssensor nicht detektiert werden.

Die Bewertung der Leistungsfähigkeit des mindestens einen Umgebungssensors basiert somit bei der erfindungsgemäßen Lösung auf einer, insbesondere fortlaufenden, Ermittlung von False Negatives des Umgebungssensors und auf einer Klassifizierung der Zeitdauern der ermittelten False Negatives, d. h. von Nichtdetektionsdauern, nach vorgegebenen Zeitklassen. False Negative, d. h. falsch negativ, bedeutet, dass ein Umgebungssensor an einem Ort kein Objekt detektiert, obwohl an dem Ort ein Objekt tatsächlich vorhanden ist. Ein False Negative ist somit ein Messergebnis, das angibt, dass der Umgebungssensor in einem Messzyklus ein für ihn sichtbares Objekt nicht detektiert hat. Es wird für jede der Zeitklassen eine False-Negative-Rate der jeweiligen Zeitklasse ermittelt, die angibt, wievielmal False Negatives der jeweiligen Zeitklasse während des vorgegebenen Auswertezeitraums auftreten. Für jede der Zeitklassen wird eine False-Negative-Schwelle definiert. Für jede Zeitklasse wird ermittelt, wievielmal die False-Negative-Rate der jeweiligen Zeitklasse die für diese Zeitklasse definierte False-Negative-Schwelle überschreitet. Wenn die ermittelte Anzahl der Überschreitungen höher ist als ein für die jeweilige Zeitklasse vorgegebener Wert, wird die Leistungsfähigkeit als beeinträchtigt bewertet.

Beim automatisierten, insbesondere hochautomatisierten oder autonomen, Fahrbetrieb muss das Fahrzeug, insbesondere ein System des Fahrzeugs zur Durchführung des automatisierten, insbesondere hochautomatisierten oder autonomen, Fahrbetriebs, erkennen, ob seine Umgebungssensoren vorgegebene Anforderungen bezüglich ihrer Leistungsfähigkeit bezüglich der Objekterkennung, zum Beispiel vorgegebene Detektionsraten, erfüllen. Dies wird durch die erfindungsgemäße Lösung ermöglicht. Bei Nichterfüllung wird der automatisierte, insbesondere hochautomatisierte oder autonome, Fahrbetrieb an die reduzierte Leistungsfähigkeit angepasst, beispielsweise durch Reduzierung einer maximal zulässigen Fahrgeschwindigkeit, oder der automatisierte, insbesondere hochautomatisierte oder autonome, Fahrbetrieb wird beendet und die Fahrzeugführung wird an einen Fahrzeugführer übergeben.

Durch die erfindungsgemäße Lösung wird somit der automatisierte, insbesondere hochautomatisierte oder autonome, Fahrbetrieb abgesichert, indem er nur dann zugelassen wird, wenn die Leistungsfähigkeit des mindestens einen oder des jeweiligen Umgebungssensors, d. h. die Sensorperformance, vorgegebene Anforderungen erfüllt.

In einer möglichen Ausführungsform werden die Verfahrensschritte bei mehreren Referenzobjekten für jedes Referenzobjekt durchgeführt und/oder bei mehreren Umgebungssensoren für jeden Umgebungssensor durchgeführt. Dadurch können mittels der beschriebenen Lösung alle Umgebungssensoren des Fahrzeugs hinsichtlich ihrer Leistungsfähigkeit bewertet werden. Durch die Verwendung aller Referenzobjekte wird die Bewertung der Leistungsfähigkeit verbessert.

In einer möglichen Ausführungsform werden zum Erfassen der False Negatives Detektionsergebnisse anderer Umgebungssensoren des Fahrzeugs bezüglich des Referenzobjekts berücksichtigt. Dadurch kann insbesondere festgestellt werden, ob es sich bei einem jeweiligen Objekt um ein geeignetes Referenzobjekt handelt, und es kann festgestellt werden, ob das Objekt mittels des zu bewertenden Umgebungssensors erfassbar sein müsste, so dass für den zu bewertenden Umgebungssensor die False Negatives korrekt ermittelt werden können.

In einer möglichen Ausführungsform werden die Detektionsergebnisse einer Sensordatenfusion der anderen Umgebungssensoren des Fahrzeugs verwendet. Dadurch wird die Sicherheit bei der Bestimmung der False Negatives für den zu bewertenden Umgebungssensor erhöht und somit die Bewertung von dessen Leistungsfähigkeit verbessert.

In einer möglichen Ausführungsform wird die Leistungsfähigkeit eines als Radarsensor, Lidarsensor oder Kamerasensor ausgebildeten Umgebungssensors des Fahrzeugs bewertet.

In einer möglichen Ausführungsform wird die Leistungsfähigkeit eines Umgebungssensors des Fahrzeugs bewertet, welcher einen gerade oder schräg nach vorn oder gerade oder schräg nach hinten ausgerichteten Erfassungsbereich aufweist. Dadurch können als Referenzobjekte insbesondere andere Verkehrsteilnehmer verwendet werden, welche sich über einen längeren Zeitraum gerade oder schräg vor dem Fahrzeug bzw. gerade oder schräg hinter dem Fahrzeug befinden, insbesondere vorausfahrende bzw. nachfolgende andere Verkehrsteilnehmer.

In einer möglichen Ausführungsform wird der automatisierte, insbesondere hochautomatisierte oder autonome, Fahrbetrieb bei der als beeinträchtigt bewerteten Leistungsfähigkeit an die beeinträchtigte Leistungsfähigkeit angepasst, insbesondere wird eine Geschwindigkeit des Fahrzeugs reduziert, oder der automatisierte Fahrbetrieb wird beendet. Dadurch wird sichergestellt, dass der automatisierte, insbesondere hochautomatisierte oder autonome, Fahrbetrieb nur mit ausreichend leistungsfähigen Umgebungssensoren und dadurch mit hoher Sicherheit durchgeführt wird.

Der beschriebenen Lösung liegt insbesondere die Idee zugrunde, dass eine False-Negative-Rate, die eine bestimmte False-Negative-Schwelle übersteigt, bei einer geringen Nicht-Detektionsdauer eher toleriert werden kann als bei einer hohen Nicht-Detektionsdauer. Die Leistungsfähigkeit eines Umgebungssensors wird daher vorteilhafterweise in Abhängigkeit der False-Negative-Rate der verschiedenen Zeitklassen bewertet.

Als Anforderungen, die ein bestimmter Umgebungssensor erfüllen muss, wird daher vorteilhafterweise vorgegeben, wievielmal in einem vorgegebenen Zeitraum, d. h. wie häufig, die False-Negative-Rate einer bestimmten Zeitklasse gleich einer für diese Zeitklasse definierten False-Negative-Schwelle maximal sein darf. Die False-Negative-Schwelle wird vorteilhafterweise für jeden Sensortyp, d. h. beispielsweise für den Radarsensor, für den Lidarsensor und für den Kamerasensor, individuell vorgegeben.

Wenn der Umgebungssensor alle diese Anforderungen erfüllt, wird seine Leistungsfähigkeit als nicht beeinträchtigt bewertet. Anderenfalls wird die Leistungsfähigkeit als beeinträchtigt bewertet.

Vorteilhafterweise werden in analoger Weise die Anforderungen der übrigen Umgebungssensoren vorgegeben und geprüft.

Anhand der detektierten False Negatives eines Umgebungssensors können beispielsweise, alternativ oder zusätzlich, auch weitere Größen zur Bewertung der Leistungsfähigkeit berechnet werden, zum Beispiel eine mittlere Dauer zwischen den False Negatives eines Umgebungssensors und/oder eine mittlere Dauer zwischen den False Negatives einer bestimmten False-Negative-Klasse, d. h. Zeitklasse, eines Umgebungssensors.

Anhand der detektierten False Negatives eines Umgebungssensors in einem bestimmten Zeitfenster können beispielsweise auch weitere Statistiken für längere Zeitfenster ermittelt werden.

Der beschriebenen Lösung liegt somit vorteilhafterweise folgende Idee zugrunde:
Es werden fortlaufend False Negatives eines ausgewählten Umgebungssensors erfasst. Unter False Negative ist dabei ein Messergebnis zu verstehen, das angibt, dass der ausgewählte Umgebungssensor in einem Messzyklus mindestens ein Referenzobjekt, das für den Umgebungssensor sichtbar ist, nicht detektiert hat. Die Information über die Anwesenheit der für den Umgebungssensor sichtbaren Referenzobjekte wird von anderen Umgebungssensoren geliefert.

Es werden die während eines vorgegebenen Auswertezeitraums erfassten False Negatives nach ihrer zeitlichen Länge klassifiziert, um sie jeweils einer von mehreren vorgegebenen Zeitklassen zuzuordnen.

Für jede der vorgegebenen Zeitklassen wird ermittelt, wievielmal innerhalb des vorgegebenen Auswertezeitraums False Negatives der jeweiligen Zeitklasse detektiert werden. Die Anzahl der innerhalb des Auswertezeitraums ermittelten False Negatives einer bestimmten Zeitklasse entspricht der False-Negative-Rate dieser Zeitklasse.

Für jede Zeitklasse wird eine False-Negative-Schwelle definiert.

Für jede Zeitklasse wird eine Häufigkeitsschwelle definiert.

Für jede Zeitklasse wird ermittelt, ob die False-Negative-Schwelle der jeweiligen Zeitklasse durch die False-Negative-Rate der jeweiligen Zeitklasse überschritten wird und mit welcher Häufigkeit, insbesondere wievielmal pro Stunde, diese Überschreitungen gegebenenfalls auftreten. Wenn die ermittelte Häufigkeit die für die jeweilige Zeitklasse definierte Häufigkeitsschwelle übersteigt, wird die Leistungsfähigkeit des Umgebungssensors als beeinträchtigt bewertet.

Die obigen Schritte werden vorteilhafterweise für jedes vorhandene Referenzobjekt und für jeden der zu überprüfenden Umgebungssensoren durchgeführt.

Ausführungsbeispiele der Erfindung werden im Folgenden anhand einer Zeichnung näher erläutert.

Dabei zeigt:

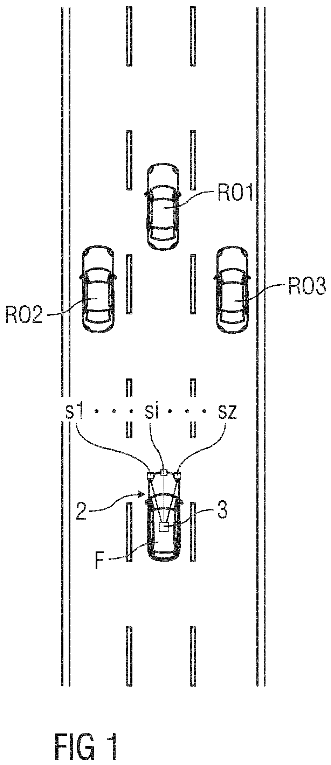

Fig. 1    schematisch eine Verkehrssituation mit einem Fahrzeug und mehreren als andere Fahrzeuge ausgebildeten Referenzobjekten in einer Umgebung des Fahrzeugs.

Figur 1 zeigt eine schematische Darstellung einer Verkehrssituation mit einem Fahrzeug F und mehreren als andere Fahrzeuge ausgebildeten Referenzobjekten RO1, RO2, RO3 in einer Umgebung des Fahrzeugs F. Das Fahrzeug F ist insbesondere ein für einen automatisierten Fahrbetrieb, insbesondere für einen hochautomatisierten oder autonomen Fahrbetrieb, eingerichtetes Fahrzeug F.

Das Fahrzeug F umfasst eine Vorrichtung 2, welche ausgebildet und eingerichtet ist zur Durchführung eines im Folgenden beschriebenen Verfahrens zur Bewertung einer Leistungsfähigkeit mindestens eines Umgebungssensors $s1$, $si$, $sz$ oder mehrerer Umgebungssensoren $s1$, $si$, $sz$ eines solchen Fahrzeugs F. Bezüglich der Umgebungssensoren $s1$, $si$, $sz$ ist i eine Laufvariable von 1 bis z, d. h. es sind $s1$ bis $sz$ Umgebungssensoren am Fahrzeug F vorhanden. Die Mehrzahl der am Fahrzeug F vorhandenen Umgebungssensoren $s1$, $si$, $sz$ mit i=1 bis z wird daher im Folgenden auch als Umgebungssensoren $s1$ bis $sz$ bezeichnet. Der jeweilige Umgebungssensor wird im Folgenden, wenn er nicht konkret, beispielsweise als $s1$, bezeichnet wird, mit Umgebungssensor $s1$ bis $sz$ oder mit Umgebungssensor $si$ bezeichnet.

Die Vorrichtung 2 umfasst insbesondere eine, insbesondere mit den Umgebungssensoren $s1$ bis $sz$ gekoppelte, Verarbeitungseinheit 3. Insbesondere ist diese Verarbeitungseinheit 3 ausgebildet und eingerichtet zur Durchführung dieses Verfahrens. Das Fahrzeug F, insbesondere dessen Vorrichtung 2, umfasst zudem insbesondere den mindestens einen Umgebungssensor $s1$ bis $sz$, insbesondere mehrere Umgebungssensoren $s1$ bis $sz$. Der jeweilige Umgebungssensor $s1$ bis $sz$ ist beispielsweise als Radarsensor, Lidarsensor oder Kamerasensor ausgebildet, wobei mehrere gleich oder unterschiedlich ausgebildete Umgebungssensoren $s1$ bis $sz$ vorgesehen sein können. Der mindestens eine oder jeweilige Umgebungssensor $s1$ bis $sz$ ist insbesondere ein Umgebungserfassungssensor, insbesondere zur Erfassung einer äußeren Umgebung des Fahrzeugs F. Die Leistungsfähigkeit des mindestens einen oder jeweiligen Umgebungssensors $s1$ bis $sz$ wird auch als Sensorperformance bezeichnet.

In dem Verfahren werden insbesondere folgende Verfahrensschritte durchgeführt:

- Erfassen, insbesondere fortlaufendes Erfassen, von False Negatives des Umgebungssensors $s1$ bis $sz$ bezüglich mindestens eines Referenzobjekts RO1, RO2, RO3,
- Klassifizieren der während eines vorgegebenen Auswertezeitraums erfassten False Negatives nach ihrer zeitlichen Länge und Zuordnen zu jeweils einer von mehreren vorgegebenen Zeitklassen,
- Ermitteln einer False-Negative-Rate der jeweiligen Zeitklasse für jede der Zeitklassen, die angibt, wie oft False Negatives der jeweiligen Zeitklasse während des vorgegebenen Auswertezeitraums auftreten,
- Vorgeben einer False-Negative-Schwelle für jede der Zeitklassen,
- Ermitteln für jede Zeitklasse, wie oft die False-Negative-Rate der jeweiligen Zeitklasse die für diese Zeitklasse vorgegebene False-Negative-Schwelle überschreitet,
- Bewerten der Leistungsfähigkeit des Umgebungssensors $s1$ bis $sz$ als beeinträchtigt, wenn die, insbesondere innerhalb eines vorgegebenen Zeitraums, beispielsweise einer Stunde, ermittelte Anzahl der Überschreitungen der für die jeweilige Zeitklasse vorgegebenen False-Negative-Schwelle durch die False-Negative-Rate höher ist als ein für die jeweilige Zeitklasse vorgegebener Wert, insbesondere eine für die jeweilige Zeitklasse vorgegebene Häufigkeitsschwelle.

Insbesondere beim hochautomatisierten Fahrbetrieb muss das Fahrzeug F oder ein System des Fahrzeugs F zur Durchführung dieses hochautomatisierten Fahrbetriebs erkennen, ob seine Umgebungssensoren $s1$ bis $sz$ vorgegebene Anforderungen bezüglich ihrer Leistungsfähigkeit bezüglich der Objekterkennung z.B. Detektionsraten erfüllen. Bei Nichterfüllung, d. h. bei als beeinträchtigt bewerteter Leistungsfähigkeit, wird der hochautomatisierte Fahrbetrieb an die reduzierte Leistungsfähigkeit angepasst, beispielsweise durch Reduzierung einer maximal zulässigen Fahrgeschwindigkeit, oder der hochautomatisierte Fahrbetrieb wird beendet und die Fahrzeugführung an einen Fahrzeugführer übergeben. Das hier beschriebene Verfahren ermöglicht die Bewertung der Leistungsfähigkeit des jeweiligen Umgebungssensors $s1$ bis $sz$.

Aus dem Stand der Technik sind bereits Verfahren zur Ermittlung der Detektionsraten von Umgebungssensoren $s1$ bis $sz$ bekannt, beispielsweise aus der DE 10 2017 006 260 A1. Die Ermittlung basiert bei diesem Stand der Technik auf einer statistischen Auswertung von Objektdetektionen der verschiedenen Umgebungssensoren $s1$ bis $sz$.

Bei der Bewertung von Sensordetektionen wird üblicherweise zwischen False Positives, False Negatives und True Positives unterschieden. False Positive, d. h. falsch positiv, bedeutet, dass ein Umgebungssensor $s1$ bis $sz$ an einem Ort ein Objekt detektiert, obwohl an dem Ort tatsächlich kein Objekt vorhanden ist. Dies wird auch als Geisterobjekt bezeichnet. False Negative, d. h. falsch negativ, bedeutet, dass ein Umgebungssensor $s1$ bis $sz$ an einem Ort kein Objekt detektiert, obwohl an dem Ort ein Objekt tatsächlich vorhanden ist. True Positive, d. h. wahr oder tatsächlich positiv, bedeutet, dass ein Umgebungssensor $s1$ bis $sz$ an einem Ort ein Objekt detektiert, das an dem Ort tatsächlich vorhanden ist. Die True Positives werden in dem oben genannten Stand der Technik als Detektionsraten bezeichnet.

Die Bewertung der Leistungsfähigkeit eines Umgebungssensors $s1$ bis $sz$ basiert auf der fortlaufenden Ermittlung von False Negatives. Ein False Negative ist ein Messergebnis, das angibt, dass der Umgebungssensor $s1$ bis $sz$ in einem Messzyklus ein für ihn sichtbares Objekt, im dargestellten Beispiel das jeweilige Referenzobjekt RO1, RO2, RO3, nicht detektiert hat.

Des Weiteren werden Nichtdetektionsdauern ermittelt, also die Zeitdauern der False Negatives. Die Nichtdetektionsdauern werden entsprechend ihrer Zeitdauer klassifiziert und jeweils einer von mehreren Zeitklassen zugeordnet. Es wird ermittelt, wievielmal False Negatives der jeweiligen Zeitklasse während eines vorgegebenen Auswertezeitraums auftreten. Die Anzahl der ermittelten False Negatives einer bestimmten Zeitklasse bezogen auf den Auswertezeitraum wird als False-Negative-Rate (FN-Rate) der jeweiligen Zeitklasse bezeichnet. Für jede der Zeitklassen wird eine False-Negative-Schwelle (FN-Schwelle) definiert. Für jede Zeitklasse wird ermittelt, wievielmal die False-Negative-Rate der jeweiligen Zeitklasse die für diese Zeitklasse definierte False-Negative-Schwelle überschreitet. Wenn die ermittelte Anzahl der Überschreitungen höher ist als ein für die jeweilige Zeitklasse vorgegebener Wert, wird die Leistungsfähigkeit als beeinträchtigt bewertet.

Vorteilhafterweise werden mehrere Umgebungssensoren s1 bis sz zur Objektdetektion eingesetzt, und Objekte, die in vorgegebenen Ortsbereichen der Fahrzeugumgebung detektiert werden, werden als Referenzobjekte RO1, RO2, RO3, d. h. als relevante Objekte, identifiziert. Die Detektion der Objekte erfolgt dabei durch Sensordatenfusion. Es werden somit zur Bewertung der Leistungsfähigkeit eines jeweiligen Umgebungssensors s1 bis sz vorteilhafterweise auch Detektionsergebnisse mehrerer oder aller anderen Umgebungssensors s1 bis sz des Fahrzeugs F verwendet, insbesondere zum Erfassen der False Negatives bezüglich des oder des jeweiligen Referenzobjekts RO1, RO2, RO3. Dabei werden diese Detektionsergebnisse der anderen Umgebungssensoren s1 bis sz vorteilhafterweise einer Sensordatenfusion unterzogen und dann die fusionierten Sensordaten für den beschriebenen Zweck verwendet.

Die vorgegebenen Ortsbereiche sind Regions of Interest, d. h. Regionen von Interesse, die sich in der Umgebung des Fahrzeugs F, beispielsweise unmittelbar voraus, vorne links, vorne rechts, innerhalb der Sensorreichweite befinden. In diesen Ortsbereichen befinden sich Objekte, die für das Fahrzeug F relevant sind, d. h. auf die das Fahrzeug F schnell reagieren muss bzw. auf die das System mit einem bestimmten Soll-Verhalten reagieren muss. Mittels des hier beschriebenen Verfahrens wird daher insbesondere die Leistungsfähigkeit eines oder eines jeweiligen Umgebungssensors s1 bis sz des Fahrzeugs F bewertet, welcher einen gerade oder schräg nach vorn ausgerichteten Erfassungsbereich aufweist.

Referenzobjekte RO1, RO2, RO3 sind ausgewählte Objekte, die für die Durchführung eines bestimmten Tests der Leistungsfähigkeit, zum Beispiel Bewertung der Leistungsfähigkeit hinsichtlich der False Negatives, geeignet sind. Die Auswahl des Referenzobjekts RO1, RO2, RO3 kann nach folgenden Kriterien erfolgen:

- Das Objekt existiert, d. h. es wird von mindestens einem der Umgebungssensoren s1 bis sz erkannt,
- das Objekt müsste auch von dem zu bewertenden Umgebungssensor s1 bis sz erkannt werden, liegt also in dessen Erfassungsbereich, und
- das Objekt ist für den zu bewertenden Umgebungssensor s1 bis sz nicht verdeckt.

Die Referenzobjekte RO1, RO2, RO3 sind somit insbesondere Objekte, die sich unmittelbar vor dem Fahrzeug F und seitlich vor dem Fahrzeug F befinden. Beispiele von Objekten, die nicht als Referenzobjekte RO1, RO2, RO3 geeignet sind, sind beispielsweise ein Objekt, das für den jeweiligen Umgebungssensor s1 bis sz verdeckt ist, und ein Objekt, das außerhalb des Detektionsbereiches des Umgebungssensors s1 bis sz liegt. Solche Objekte sind nicht geeignet, um die Detektionsperformance, d. h. die Leistungsfähigkeit bezüglich Detektionen, eines Umgebungssensors s1 bis sz zu überprüfen, da sie vom Umgebungssensor s1 bis sz nicht erfasst werden können und somit vom Umgebungssensor s1 bis sz nicht detektiert werden.

Im Beispiel gemäß Figur 1 sind die Referenzobjekte RO1, RO2, RO3 sich direkt und seitlich vor dem Fahrzeug F befindende andere Fahrzeuge.

Bei den mehreren Umgebungssensoren s1 bis sz handelt es sich beispielsweise jeweils um einen Radarsensor, einen Lidarsensor oder einen Kamerasensor. Dabei sind Kombinationen mehrerer gleicher oder verschiedener Umgebungssensoren s1 bis sz möglich.

Für jeden der Umgebungssensoren s1 bis sz wird die False-Negative-Rate (FN-Rate) anhand der detektierten False Negatives des jeweiligen Umgebungssensors s1 bis sz ermittelt. Die Ermittlung erfolgt über ein vorgegebenes Zeitfenster, d. h. über einen vorgegebenen Auswertezeitraum. Dieses vorgegebene Zeitfenster, d. h. der vorgegebene Auswertezeitraum, umfasst eine vorgegebene Anzahl von Messzyklen. Die Ermittlung erfolgt gemäß folgender Gleichung:

$$FN_{si} = \frac{N(FN)_{si}}{m^j} \tag{1}$$

Dabei stellt $FN_{si}$ die FN-Rate dar. $N(FN)_{si}$ steht für die Anzahl der Male, in denen der Umgebungssensor si ein Referenzobjekt RO1, RO2, RO3 nicht erkannt hat, d. h. für die Anzahl der erkannten Nicht-Detektionen. Mit $m^j$ ist die Anzahl von Messzyklen bezeichnet, die im Auswertezeitraum durchgeführt werden. Diese Anzahl ist ein Maß für die Dauer des Auswertezeitraums.

Des Weiteren wird für den Umgebungssensor si ermittelt, wie lange die erkannten Nicht-Detektionen dauerten, d. h. es wird eine Nicht-Detektionsdauer $L_{si}$ ermittelt. Die Nicht-Detektionsdauer $L_{si}$ entspricht der Anzahl von aufeinanderfolgenden Messzyklen, in denen ein Referenzobjekt RO1, RO2, RO3 vom Umgebungssensor si nicht detektiert worden ist.

Die Nicht-Detektionsdauern $L_{si}$ werden nach ihrer zeitlichen Länge klassifiziert. Dazu werden eine Reihe von Zeitklassen Lk, k = 1, ... n definiert und die ermittelten Nicht-Detektionsdauern werden entsprechend ihrer zeitlichen Länge jeweils einer dieser Zeitklassen Lk zugeordnet.

Für jede Zeitklasse Lk wird ermittelt, wievielmal False Negatives der jeweiligen Zeitklasse Lk innerhalb des Auswertezeitraums auftreten, und basierend hierauf wird die False-Negative-Rate der jeweiligen Zeitklasse wie folgt berechnet:

$$FN(Lk)_{si} = \frac{N(Lk)}{T} \tag{2}$$

Dabei steht $FN(Lk)_{si}$ für die False-Negative-Rate der Zeitklasse Lk. Der Index si gibt an, dass diese False-Negative-Rate der Zeitklasse Lk für den Umgebungssensor si ermittelt worden ist. N(Lk) steht für die Anzahl der False Negatives, die im Auswertezeitraum der Zeitklasse Lk zugeordnet worden sind. T steht für die Dauer des Auswertezeitraums oder, was gleichbedeutend ist, für die Anzahl der Messzyklen im Auswertezeitraum. Die False-Negative-Rate der Zeitklasse Lk entspricht somit dem Ergebnis einer Klassifizierung der False-Negative-Rate nach den Zeitklassen.

Eine weitere mögliche Klassifizierung der False-Negative-Rate kann beispielsweise auf Basis von Objekttypen, beispielsweise False-Negative-Rate der Zeitklasse Lk bezüglich PKWs, False-Negative-Rate der Zeitklasse Lk bezüglich LKWs, und/oder auf Basis weiterer Objekteigenschaften, zum Beispiel Objektgeschwindigkeit, erfolgen.

Anhand der folgenden Tabelle 1 soll beispielsweise für einen Umgebungssensor s1 und ein Referenzobjekt RO1, RO2, RO3 verdeutlicht werden, wie die Leistungsfähigkeit des Umgebungssensors s1 bewertet wird. Der Umgebungssensor s1 ist beispielsweise ein Lidarsensor und das Referenzobjekt RO1, RO2, RO3 ist beispielsweise das unmittelbar vorausfahrende Fahrzeug in Figur 1, d. h. das Referenzobjekt RO1.

Der Auswertezeitraum umfasst in diesem Beispiel neun Messzyklen. Das Referenzobjekt RO1 konnte in jedem der Messzyklen anhand der im Fahrzeug F vorhandenen Umgebungssensoren s1 bis sz identifiziert werden. Der Auswertezeitraum ist aus Darstellungsgründen gering gewählt, in einer realen Anwendung kann er wesentlich höher gewählt werden. Der aktuelle Messzyklus ist mit $t_0$ bezeichnet und die zurückliegenden acht Messzyklen sind mit $t_{-1}$ bis $t_{-8}$ bezeichnet. Die Tabelle 1 zeigt die Messzyklen und die in den Messzyklen jeweils erfolgten Detektionen. Mit 1 ist dabei angegeben, dass der Umgebungssensor s1 das Referenzobjekt RO1 im jeweiligen Messzyklus detektiert hat. Mit 0 ist angegeben, dass der Umgebungssensor s1 das Referenzobjekt RO1 im jeweiligen Messzyklus nicht detektiert hat.

Es werden beispielsweise drei Zeitklassen L1, L2 und L3 wie folgt definiert:

- Nicht-Detektionsdauern mit $0<L_{s1}<2$ werden der Zeitklasse L1 zugeordnet,
- Nicht-Detektionsdauern mit $L_{s1}=2$ werden der Zeitklasse L2 zugeordnet,
- Nicht-Detektionsdauern mit $L_{s1}>2$ werden der Zeitklasse L3 zugeordnet.

Die Zeitklassen L1, L2, L3 werden nachfolgend auch als FN-Klassen bezeichnet.

Tabelle 1:

| Messzyklus | $t_{-8}$ | $t_{-7}$ | $t_{-6}$ | $t_{-5}$ | $t_{-4}$ | $t_{-3}$ | $t_{-2}$ | $t_{-1}$ | $t_0$ |
|---|---|---|---|---|---|---|---|---|---|
| Detektion | 1 | 0 | 1 | 1 | 1 | 1 | 1 | 1 | 1 |

Für dieses Beispiel gilt

$$FN_{s1} = \frac{1}{9\ Zyklen} \tag{3}$$

und

$$L_{s1} = 1 \tag{4}$$

Das heißt, das Referenzobjekt RO1 wurde vom Umgebungssensor s1 in einem von den neun beobachteten Messzyklen nicht detektiert. Dabei wurde es in maximal einem Messzyklus, hier im Messzyklus $t_{-7}$, nicht detektiert.

Die ermittelte Nicht-Detektionsdauer $L_{s1} = 1$ wird gemäß der oben definierten Klassifizierung der Zeitklasse L1 zugeordnet.

Es wird somit in einem von neun Messzyklen ein False Negative der Zeitklasse L1 detektiert.

Man erhält als Ergebnis für die False-Negative-Rate der Zeitklasse L1

$$FN(L1)_{s1} = \frac{1}{9\ Zyklen} \tag{5}$$

Es werden keine False Negatives der Zeitklassen L2 oder L3 detektiert. Die False-Negative-Raten der Zeitklassen L2 und L3 betragen somit:

$$FN(L2)_{s1} = 0/9\ \text{Zyklen} \tag{6}$$

$$FN(L3)_{s1} = 0/9\ \text{Zyklen} \tag{7}$$

Die folgende Tabelle 2 zeigt ein weiteres Beispiel einer Messung:

Tabelle 2:

| Messzyklus | $t_{-8}$ | $t_{-7}$ | $t_{-6}$ | $t_{-5}$ | $t_{-4}$ | $t_{-3}$ | $t_{-2}$ | $t_{-1}$ | $t_0$ |
|---|---|---|---|---|---|---|---|---|---|
| Detektion | 1 | 0 | 0 | 1 | 1 | 1 | 1 | 1 | 1 |

In diesem Beispiel erhält man die False-Negative-Rate

$$FN_{s1} = \frac{2}{9\ Zyklen} \tag{8}$$

aber eine längere Nicht-Detektionsdauer

$$L_{s1} = 2 \tag{9}$$

Das heißt, das Referenzobjekt RO1 wurde vom Umgebungssensor s1 in zwei von neun beobachteten Messzyklen nicht detektiert. Dabei wurde es maximal in zwei aufeinanderfolgenden Messzyklen nicht detektiert.

Die ermittelte Nicht-Detektionsdauer $L_{s1}=2$ wird gemäß der oben definierten Klassifizierung der Zeitklasse L2 zugeordnet.

Es liegt nur ein False Negative der Zeitklasse L2 vor, ermittelt in zwei von neun Messzyklen.

Die False-Negative-Rate der Zeitklasse L2 beträgt somit:

$$FN(L2)_{s1} = \frac{1}{9\ Zyklen} \tag{10}$$

Es werden keine False Negatives der Zeitklassen L1 oder L3 detektiert. Die False-Negative-Raten der Zeitklassen L1 und L3 betragen somit:

$$FN(L1)_{s1} = 0/9\ \text{Zyklen} \tag{11}$$

$$FN(L3)_{s1} = 0/9\ \text{Zyklen} \tag{12}$$

Bei einer Messung gemäß der folgenden Tabelle 3

Tabelle 3:

| Messzyklus | $t_{-8}$ | $t_{-7}$ | $t_{-6}$ | $t_{-5}$ | $t_{-4}$ | $t_{-3}$ | $t_{-2}$ | $t_{-1}$ | $t_0$ |
|---|---|---|---|---|---|---|---|---|---|
| Detektion | 1 | 0 | 0 | 0 | 1 | 1 | 1 | 1 | 1 |

erhält man die FN-Rate

$$FN_{s1} = \frac{3}{9\ Zyklen} \tag{13}$$

aber eine noch längere Nicht-Detektionsdauer

$$L_{s1} = 3 \tag{14}$$

Die ermittelte Nicht-Detektionsdauer $L_{s1} = 3$ wird gemäß der oben definierten Klassifizierung der Zeitklasse L3 zugeordnet.
Es liegt ein False Negative der Zeitklasse L3 vor.
Die False-Negative-Rate der Zeitklasse L3 beträgt somit:

$$FN(L3)_{s1} = \frac{1}{9\ Zyklen} \tag{15}$$

Es werden keine False Negatives der Zeitklassen L1 oder L2 detektiert. Die False-Negative-Rate der Zeitklassen L1 und L2 betragen somit:

$$FN(L1)_{s1} = 0/9\ Zyklen \tag{16}$$

$$FN(L2)_{s1} = 0/9\ Zyklen \tag{17}$$

Bei einer Messung gemäß der

Tabelle 4:

| Messzyklus | $t_{-8}$ | $t_{-7}$ | $t_{-6}$ | $t_{-5}$ | $t_{-4}$ | $t_{-3}$ | $t_{-2}$ | $t_{-1}$ | $t_0$ |
|---|---|---|---|---|---|---|---|---|---|
| Detektion | 1 | 0 | 0 | 0 | 1 | 1 | 0 | 1 | 0 |

erhält man die False-Negative-Rate

$$FN_{s1} = \frac{5}{9\ Zyklen} \tag{18}$$

und man erhält zwei Nicht-Detektionsdauern

$$L_{s1} = 3 \tag{19}$$

und

$$L_{s1} = 1 \tag{20}$$

Die ermittelte Nicht-Detektionsdauer $L_{s1} = 3$ wird der Zeitklasse L3 zugeordnet und die Nicht-Detektionsdauer $L_{s1} = 1$ wird der Zeitklasse L1 zugeordnet.
Es liegt ein False Negative der Zeitklasse L3 vor und es liegen zwei False Negatives der Zeitklasse L1 vor.

9

Die False-Negative-Raten der Zeitklasse L1 und L3 lauten somit:

$$FN(L1)_{s1} = \frac{2}{9\ Zyklen} \tag{21}$$

$$FN(L3)_{s1} = \frac{1}{9\ Zyklen} \tag{22}$$

Diese Messungen werden für alle Umgebungssensoren s1 bis sz durchgeführt.

Der beschriebenen Lösung liegt die Idee zugrunde, dass eine False-Negative-Rate, die eine bestimmte False-Negative-Schwelle übersteigt, bei einer geringen Nicht-Detektionsdauer eher toleriert werden kann als bei einer hohen Nicht-Detektionsdauer. Die Leistungsfähigkeit eines Umgebungssensors s1 bis sz wird daher in Abhängigkeit der FN-Raten der verschiedenen Zeitklassen bewertet.

Als Anforderungen, die ein bestimmter Umgebungssensor s1 bis sz erfüllen muss, wird vorgegeben, wievielmal in einem vorgegebenen Zeitraum, d. h. wie häufig, die False-Negative-Rate einer bestimmten Zeitklasse Lk gleich einer für diese Zeitklasse Lk definierten False-Negative-Schwelle maximal sein darf. Die False-Negative-Schwelle wird für jeden Sensortyp individuell vorgegeben.

Beispielsweise lautet die Anforderung für einen Umgebungssensor s1 bis sn,

- dass die False-Negative-Rate der Zeitklasse L1 die False-Negative-Schwelle der Zeitklasse L1 maximal fünfmal in der Stunde erreichen darf und nicht höher als diese False-Negative-Schwelle sein darf,
- dass die False-Negative-Rate der Zeitklasse L2 die False-Negative-Schwelle der Zeitklasse L2 maximal dreimal in der Stunde erreichen darf und nicht höher als diese False-Negative-Schwelle sein darf, und
- dass die False-Negative-Rate der Zeitklasse L3 die False-Negative-Schwelle der Zeitklasse L3 maximal einmal in der Stunde erreichen darf und nicht höher als diese False-Negative-Schwelle sein darf.

Wenn der Umgebungssensor s1 bis sz alle diese Anforderungen erfüllt, wird seine Leistungsfähigkeit als nicht beeinträchtigt bewertet. Anderenfalls wird die

Leistungsfähigkeit als beeinträchtigt bewertet. Die Leistungsfähigkeit wird somit als beeinträchtigt bewertet, wenn ermittelt wird, dass die False-Negative-Rate der Zeitklasse L1 die für diese Zeitklasse L1 definierte False-Negative-Schwelle öfters als fünfmal in der Stunde überschreitet oder wenn die False-Negative-Rate der Zeitklasse L2 die für diese Zeitklasse L2 definierte False-Negative-Schwelle öfters als dreimal in der Stunde überschreitet oder wenn die False-Negative-Rate der Zeitklasse L3 die für diese Zeitklasse L3 definierte False-Negative-Schwelle öfters als einmal in der Stunde überschreitet.

In analoger Weise werden die Anforderungen der übrigen Umgebungssensoren s1 bis sz vorgegeben und geprüft.

Anhand der detektierten False Negatives eines Umgebungssensors s1 bis sz können weitere Größen zur Bewertung der Leistungsfähigkeit berechnet werden, zum Beispiel die mittlere Dauer zwischen den False Negatives eines Umgebungssensors s1 bis sz oder die mittlere Dauer zwischen den False Negatives einer bestimmten False-Negative-Klasse (Zeitklasse) eines Umgebungssensors s1 bis sz.

Anhand der detektierten False Negatives eines Umgebungssensors s1 bis sz in einem bestimmten Zeitfenster können weitere Statistiken für längere Zeitfenster ermittelt werden.

Der beschriebenen Lösung liegt somit folgende Idee zugrunde:

Es werden fortlaufend False Negatives eines ausgewählten Umgebungssensors si erfasst. Unter False Negative ist dabei ein Messergebnis zu verstehen, das angibt, dass der ausgewählte Umgebungssensor si in einem Messzyklus mindestens ein Referenzobjekt RO1, RO2, RO3, das für den Umgebungssensor si sichtbar ist, nicht detektiert hat. Die Information über die Anwesenheit der für den Umgebungssensor si sichtbaren Referenzobjekte RO1, RO2, RO3 wird von anderen Umgebungssensoren s1 bis sz geliefert.

Es werden die während eines vorgegebenen Auswertezeitraums erfassten False Negatives nach ihrer zeitlichen Länge klassifiziert, um sie jeweils einer von mehreren vorgegebenen Zeitklassen Lk mit k = 1, ... n zuzuordnen.

Für jede der vorgegebenen Zeitklassen Lk mit k = 1, ... n wird ermittelt, wievielmal innerhalb des vorgegebenen Auswertezeitraums False Negatives der jeweiligen Zeitklasse detektiert werden. Die Anzahl der innerhalb des Auswertezeitraums ermittelten False Negatives einer bestimmten Zeitklasse entspricht der False-Negative-Rate dieser Zeitklasse.

Für jede Zeitklasse Lk mit k = 1, ... n wird eine False-Negative-Schwelle definiert.

Für jede Zeitklasse Lk mit k = 1, ... n wird eine Häufigkeitsschwelle definiert.

Für jede Zeitklasse Lk mit k = 1, ... n wird ermittelt, ob die False-Negative-Schwelle der jeweiligen Zeitklasse durch die False-Negative-Rate der jeweiligen Zeitklasse Lk überschritten wird und mit welcher Häufigkeit, d. h. wievielmal pro Stunde diese Überschreitungen gegebenenfalls auftreten. Wenn die ermittelte Häufigkeit die für die jeweilige Zeitklasse definierte Häufigkeitsschwelle übersteigt, wird die Leistungsfähigkeit des Umgebungssensors si als beeinträchtigt bewertet.

Die obigen Schritte werden für jedes vorhandene Referenzobjekt RO1, RO2, RO3 und für jeden der zu überprüfenden Umgebungssensoren s1 bis sz durchgeführt.

**Patentansprüche**

1. Verfahren zur Bewertung einer Leistungsfähigkeit mindestens eines Umgebungssensors (s1 bis sz) eines Fahrzeugs (F), insbesondere eines für einen automatisierten Fahrbetrieb, insbesondere für einen hochautomatisierten Fahrbetrieb, eingerichteten Fahrzeugs (F),
   **gekennzeichnet durch** die Verfahrensschritte

   - Erfassen von False Negatives des Umgebungssensors (s1 bis sz) bezüglich mindestens eines Referenzobjekts (RO1, RO2, RO3),
   - Klassifizieren der während eines vorgegebenen Auswertezeitraums erfassten False Negatives nach ihrer zeitlichen Länge und Zuordnen zu jeweils einer von mehreren vorgegebenen Zeitklassen,
   - Ermitteln einer False-Negative-Rate der jeweiligen Zeitklasse für jede der Zeitklassen, die angibt, wie oft False Negatives der jeweiligen Zeitklasse während des vorgegebenen Auswertezeitraums auftreten,
   - Vorgeben einer False-Negative-Schwelle für jede der Zeitklassen,
   - Ermitteln für jede Zeitklasse, wie oft die False-Negative-Rate der jeweiligen Zeitklasse die für diese Zeitklasse vorgegebene False-Negative-Schwelle überschreitet,
   - Bewerten der Leistungsfähigkeit des Umgebungssensors (s1 bis sz) als beeinträchtigt, wenn die ermittelte Anzahl der Überschreitungen der für die jeweilige Zeitklasse vorgegebenen False-Negative-Schwelle durch die False-Negative-Rate höher ist als ein für die jeweilige Zeitklasse vorgegebener Wert.

2. Verfahren nach Anspruch 1,
   **dadurch gekennzeichnet, dass** die Verfahrensschritte bei mehreren Referenzobjekten (RO1, RO2, RO3) für jedes Referenzobjekt (RO1, RO2, RO3) durchgeführt werden und/oder bei mehreren Umgebungssensoren (s1 bis sz) für jeden Umgebungssensor (s1 bis sz) durchgeführt werden.

3. Verfahren nach einem der vorhergehenden Ansprüche,
   **dadurch gekennzeichnet, dass** zum Erfassen der False Negatives Detektionsergebnisse anderer Umgebungssensoren (s1 bis sz) des Fahrzeugs (F) bezüglich des Referenzobjekts (RO1, RO2, RO3) berücksichtigt werden.

4. Verfahren nach Anspruch 3,
   **dadurch gekennzeichnet, dass** die Detektionsergebnisse einer Sensordatenfusion der anderen Umgebungssensoren (s1 bis sz) des Fahrzeugs (F) verwendet werden.

5. Verfahren nach einem der vorhergehenden Ansprüche,
   **dadurch gekennzeichnet, dass** die Leistungsfähigkeit eines als Radarsensor, Lidarsensor oder Kamerasensor ausgebildeten Umgebungssensors (s1 bis sz) des Fahrzeugs (F) bewertet wird.

6. Verfahren nach einem der vorhergehenden Ansprüche,
   **dadurch gekennzeichnet, dass** die Leistungsfähigkeit eines Umgebungssensors (s1 bis sz) des Fahrzeugs (F) bewertet wird, welcher einen gerade oder schräg nach vorn oder gerade oder schräg nach hinten ausgerichteten Erfassungsbereich aufweist.

7. Verfahren nach einem der vorhergehenden Ansprüche,
   **dadurch gekennzeichnet, dass** der automatisierte Fahrbetrieb bei der als beeinträchtigt bewerteten Leistungsfähigkeit an die beeinträchtigte Leistungsfähigkeit angepasst oder beendet wird.

8. Vorrichtung (2), ausgebildet und eingerichtet zur Durchführung eines Verfahrens nach einem der vorhergehenden Ansprüche.

9.  Fahrzeug (F) mit einer Vorrichtung (2) nach Anspruch 8.

10. Fahrzeug (F) nach Anspruch 9, ausgebildet und eingerichtet zur Durchführung eines automatisierten Fahrbetriebs.

**Claims**

1.  Method for evaluating a performance of at least one environmental sensor (s1 to sz) of a vehicle (F), in particular of a vehicle (F) set up for an automated driving operation, in particular for a highly automated driving operation, **characterized by** the method steps of

    - detecting false negatives of the environmental sensor (s1 to sz) with respect to at least one reference object (RO1, RO2, RO3),
    - classifying the false negatives recorded during a given evaluation time period according to their length of time and assigning each to one of a plurality of given time classes,
    - determining a false negative rate of the particular time class for each of the time classes, which indicates how often false negatives of the particular time class occur during the given evaluation time period,
    - presetting a false negative threshold for each of the time classes,
    - determining for each time class how often the false negative rate of the particular time class exceeds the false negative threshold given for this time class,
    - evaluating the performance of the environmental sensor (s1 to sz) as impaired if the determined number of times the false negative threshold given for the particular time class is exceeded by the false negative rate is higher than a value given for the particular time class.

2.  Method according to claim 1, **characterized in that** the method steps are carried out for each reference object (RO1, RO2, RO3) in the case of a plurality of reference objects (RO1, RO2, RO3) and/or are carried out for each environmental sensor (s1 to sz) in the case of a plurality of environmental sensors (s1 to sz).

3.  Method according to any of the preceding claims, **characterized in that** to detect false negatives, detection results of other environmental sensors (s1 to sz) of the vehicle (F) with respect to the reference object (RO1, RO2, RO3) are taken into account.

4.  Method according to claim 3, **characterized in that** the detection results of a sensor data fusion of the other environmental sensors (s1 to sz) of the vehicle (F) are used.

5.  Method according to any of the preceding claims, **characterized in that** the performance of an environmental sensor (s1 to sz) of the vehicle (F) designed as a radar sensor, lidar sensor or camera sensor is evaluated.

6.  Method according to any of the preceding claims, **characterized in that** the performance of an environmental sensor (s1 to sz) of the vehicle (F) is evaluated which has a detection range oriented straight or diagonally forward or straight or diagonally backward.

7.  Method according to any of the preceding claims, **characterized in that** the automated driving operation is adapted to the impaired performance or terminated if the performance is evaluated as impaired.

8.  Device (2) designed and set up for carrying out a method according to any of the preceding claims.

9.  Vehicle (F) having a device (2) according to claim 8.

10. Vehicle (F) according to claim 9, designed and set up for carrying out an automated driving operation.

**Revendications**

1. Procédé permettant l'évaluation de performances d'au moins un capteur d'environnement (s1 à sz) d'un véhicule (F), en particulier d'un véhicule (F) configuré pour un fonctionnement de conduite automatisé, en particulier pour un fonctionnement de conduite hautement automatisé,
**caractérisé par** les étapes de procédé consistant à

- détecter de faux négatifs du capteur d'environnement (s1 à sz) par rapport à au moins un objet de référence (RO1, RO2, RO3),
- classifier les faux négatifs détectés pendant une période d'évaluation prédéfinie selon leur longueur temporelle et leur attribuer respectivement une parmi plusieurs classes temporelles prédéfinies,
- déterminer un taux de faux négatifs de la classe temporelle respective pour chacune des classes temporelles, lequel taux indique la fréquence d'apparition des faux négatifs de la classe temporelle respective pendant la période d'évaluation prédéfinie,
- définir un seuil de faux négatifs pour chacune des classes temporelles,
- déterminer pour chaque classe temporelle la fréquence à laquelle le taux de faux négatifs de la classe temporelle respective dépasse le seuil de faux négatifs prédéfini pour ladite classe temporelle,
- évaluer les performances du capteur d'environnement (s1 à sz) comme étant altérées si le nombre déterminé de dépassements du seuil de faux négatifs prédéfini pour la classe temporelle respective par le taux de faux négatifs est supérieur à une valeur prédéfinie pour la classe temporelle respective.

2. Procédé selon la revendication 1,
**caractérisé en ce que** les étapes de procédé sont mises en œuvre pour chaque objet de référence (RO1, RO2, RO3) en présence de plusieurs objets de référence (RO1, RO2, RO3) et/ou sont mises en œuvre pour chaque capteur d'environnement (s1 à sz) en présence de plusieurs capteurs d'environnement (s1 à sz).

3. Procédé selon l'une des revendications précédentes,
**caractérisé en ce que** des résultats de détection d'autres capteurs d'environnement (s1 à sz) du véhicule (F) sont pris en compte par rapport à l'objet de référence (RO1, RO2, RO3) pour la détection de faux négatifs.

4. Procédé selon la revendication 3,
**caractérisé en ce que** les résultats de détection d'une fusion de données de capteurs des autres capteurs d'environnement (s1 à sz) du véhicule (F) sont utilisés.

5. Procédé selon l'une des revendications précédentes,
**caractérisé en ce que** les performances d'un capteur d'environnement (s1 à sz) du véhicule (F) réalisé sous forme de capteur radar, de capteur lidar ou de capteur formant caméra sont évaluées.

6. Procédé selon l'une des revendications précédentes,
**caractérisé en ce que** les performances d'un capteur d'environnement (s1 à sz) du véhicule (F) sont évaluées, lequel capteur d'environnement présente une zone de détection orientée de manière droite ou oblique vers l'avant ou de manière droite ou oblique vers l'arrière.

7. Procédé selon l'une des revendications précédentes,
**caractérisé en ce que** le fonctionnement de conduite automatisé est adapté aux performances évaluées comme étant altérées ou prend fin en présence de performances évaluées comme étant altérées.

8. Dispositif (2) réalisé et configuré pour mettre en œuvre un procédé selon l'une des revendications précédentes.

9. Véhicule (F) comportant un dispositif (2) selon la revendication 8.

10. Véhicule (F) selon la revendication 9, réalisé et configuré pour mettre en œuvre un fonctionnement de conduite automatisé.

FIG 1

**EP 4 352 546 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017006260 A1
- US 2015347096 A1
- US 2021117787 A1
- US 2021101624 A1